# EUROPÄISCHE PATENTSCHRIFT

(11) **EP 0 746 737 B1**
(45) Veröffentlichungstag und Bekanntmachung des Hinweises auf die Patenterteilung: **25.03.1998**
(21) Anmeldenummer: 95909647.0
(22) Anmeldetag: 15.02.1995
(51) Int. Cl.: F27B 3/18

(54) **BESCHICKUNGSVORRICHTUNG FÜR LICHTBOGENOFEN**
CHARGING DEVICE FOR ARC FURNACES
DISPOSITIF DE CHARGEMENT POUR FOURS A ARC

(30) Priorität: 04.03.1994 DE 4407861
(43) Veröffentlichungstag der Anmeldung: 11.12.1996
(73) Patentinhaber: MANNESMANN Aktiengesellschaft, 40213 Düsseldorf (DE)
(72) Erfinder: FEUERSTACKE, Ewald, D-46282 Dorsten (DE)
(74) Vertreter: Meissner, Peter E., Dipl.-Ing.
(86) Internationale Anmeldenummer: DE9500235
(87) Internationale Veröffentlichungsnummer: WO9523947

(56) Entgegenhaltungen:
- EP-A- 0 058 774
- DE-A- 1 758 842
- DE-A- 2 115 329
- DE-A- 2 408 713
- US-A- 2 518 404
- US-A- 4 490 922
- US-A- 4 569 057

## Beschreibung

Die Erfindung betrifft eine Beschickungsvorrichtung für geschlossene, mindestens eine Elektrode aufweisende Lichtbogenöfen, insbesondere zum Einschmelzen von Schrott, bei denen die Charge konzentrisch und gleichmäßig rings um die Elektrode zugeführt wird.
Eine gleichmäßige Einbringung des Möllers in einen Schmelzofen trägt wesentlich zu einer sicheren Produktionsführung des Schmelzaggregats bei. Dies gilt insbesondere bei Niederschachtöfen mit relativ hoher Ausbildung des Schachtes und damit mit relativ hoher Möllersäule. Während mit einem Deckel verschließbare Lichtbogenöfen üblicherweise durch einen Chargierkorb beschickt werden, existieren verschiedene Möglichkeiten, das einzuschmelzende Gut einschließlich der Zuschlagsmittel in den Ofenkopf einzubringen.

So ist aus der DE 31 07 016 C2 bekannt, bei einer Lichtbogenofenanlage zum Erschmelzen von Eisenträgerstoffen das Beschickungsgut über einen reversiblen Förderer und an dessen Ende befindlichen Abwurfeinrichtungen mit zugehörigen Beschickungsrohren in den Ofen einzubringen. Um das Beschickungsgut einigermaßen gleichmäßig auf der Möllersäule abzulegen, sind in nachteiliger Weise mehrere Beschickungsrohre für die Ofenfüllung zum Ofenkopf zu leiten.

Weiterhin ist aus der DE 33 14 943 C2 eine vorrichtung zur Beschickung elektrothermischer Schmelzöfen bekannt, mittels der die Charge durch das Ofendach konzentrisch zur Elektrode und gleichmäßig um die Elektrode herum zugeführt werden kann-Hierbei ist, eine Ringkammer vorgesehen, die einen Boden mit mindestens einer verschießbaren, zum Ofengefäß gehenden Öffnung besitzt, durch die der Möller in das Ofenobergefäßes führbar ist. Der Boden dieser Ringkammer kann separat gedreht werden, so daß die Charge durch die dann freigegebene öffnung in den Ofen fällt. Bei der aus dieser Schrift bekannten Beschickungsvorrichtung fällt das Beschickungsgut aus großer Höhe auf den Boden der Leeren Ringkammer und wird dort bei der Drehbewegung des Bodens bei hohem verschleiß relativ über diesen geführt. Darüber hinaus sind bei dieser aufwendig konstruierten Einrichtung große und schwere Teile zu bewegen, so daß sich diese Einrichtung nur für relativ leichte Schüttgüter eignet.

Die Erfindung hat sich das Ziel gesetzt, eine einfache,
instandhaltungsgerechte Beschickungsvorrichtung zu schaffen, mit der eine metallhaltige Charge, insbesondere Schrott, bezüglich Menge, Zeit und Ort vorgebbar im Ofenkopf abgelegt werden kann.
Die Erfindung Löst diese Aufgabe durch die Merkmale des Anspruchs 1. In den folgenden Unteransprüchen sind vorteilhafte Weiterbildungen der Erfindung dargelegt.
Erfindungsgemäß werden in geschützter Lage oberhalb der Ofendecke Fahreinrichtungen in einer Ringkammer geführt. An diesen Fahreinrichtungen sind Magnete aufgehängt, die die eisenhaltige Charge von einer Materialzufuhreinrichtung abnehmen und bei ihrer Fahrt konzentrisch um die Elektrode herum beliebig an einem vorgebbaren Punkt im Ofenkopf abladen. Hierzu ist vorteilhaft eine Niveau-Meßeinrichtung der Höhe des Möllers im Ofen vorgesehen. Diese beispielsweise in Form von Sonden ausgebildete Niveaumeßeinrichtung wird eingesetzt zur Steuerung des Abwurfortes der einzelnen Magnete. Dabei kann die Steuerung sowohl so erfolgen, daß ein möglichst gleichmäßiges Niveau erreicht wird, selbstverständlich können aber auch gezielte Niveau-Unterschiede zur Führung des Möllers eingesetzt werden.

Durch die Materialzufuhreinrichtung und die Magnete wird die Charge, insbesondere der Schrott, schonend transportiert bis sie abschließend auf der Mötteroberfläche abgelegt wird.
Die Ringkammer ist dabei so ausgestaltet, daß die aggressive Ofenatmosphäre nicht zu den Fahreinrichtungen gelangt. Dies wird dadurch erreicht, daß der Durchtritt von der Ringkammer zum Ofenkopf abgedichtet ist und der Innenraum der Ringkammer ggfs. mit leichtem überdruck zum Druck im Ofenkopf gehalten wird. Hierzu sind an der Ofendecke im Bereich des Schlitzes Elemente vorgesehen, die diesen verschließen. Einsetzbar sind hier beispielsweise Gleitplatten, die während der Fahrt von den einzelnen Fördereinrichtungen mitgenommen werden. Es sind aber auch Abdichtelemente einsetzbar, die entweder elastisch sind oder von den Fördereinheiten während der Fahrt weggedrückt werden und in der übrigen Zeit gegen den Schlitzrand gedrückt werden.

Durch angepaßte Abdichtungen der Materialzufuhreinrichtungen wird sichergestellt, daß kein Rauchgas den Ofenkopf, außer an den dazu vorgesehenen Stellen, verläßt.
Zur Materialzufuhr zum Ofenkopf werden Förderbänder oder auch Rutschen eingesetzt. Der Kopf dieser Materialzufuhreinheiten ragt soweit in den Ofenkopf hinein, daß das metallische Material sicher durch die Magnete aufgenommen werden kann.

Soll der Bereich unterhalb der Materialzufuhreinheiten beschickt werden, so kann dieses beim Materialförderband unmittelbar geschehen, beim Einsatz einer Rutsche ist eine kopfendig vorgesehene Klappe zu öffnen.

Um kein Gas aus dem Ofenkopf im Bereich der Materialzuführungen nach außen treten zu lassen, sind entweder Dichtungen vorgesehen oder die Fördereinheiten befinden sich in einer Schleuse. Beim Einsatz von Dichtungen kommen in vorteilhafter Weise elastische warmfeste Materialen zum Einsatz, bei denen darüber hinaus durch einen Gasschleier die Dichtheit erhöht und den Verschleiß insbesondere durch Kühlung gemindert wird.

Beim Einsatz einer Schleuse weisen diese mindestens zwei Absperrelemente auf, wobei während des Materialtransportes jeweils ein Absperrorgang geöffnet ist, während das andere gasdicht verschlossen ist.

Die vorgeschlagene Beschickungsvorrichtung erlaubt es, beliebige Mengen an Material dem geschlossenen Ofen zuzuführen, ohne daß der Schmelzprozeß unterbrochen wird. Durch seine leichte Bauweise ist es möglich, die Beschickungsvorrichtung an den Ofenkopf zu bauen. Das Oberofengefäß kann dabei beliebig verlängert werden mit dem gewünschten Effekt, daß die Höhe der Möllersäule frei wählbar ist und deutlich höher eingestellt werden kann als bisher üblich.

Die leichte Konstruktionsbauweise erlaubt es, das gesamte Ofengefäß zumindest in begrenzten Winkelgraden zu kippen. Ermöglicht wird dies durch die nach außen ragenden Zufuhreinrichtungen, die in gewissen Grenzen eine punktgenaue Beladung zulassen.

Ein Beispiel der Erfindung ist in der beigefügten Zeichnung dargelegt. Dabei zeigt die
Figur 1 einen Schnitt durch den Ofen beim Einsatz von Förderbändern und
Figur 2 einen Auszug beim Einsatz einer Rutsche.

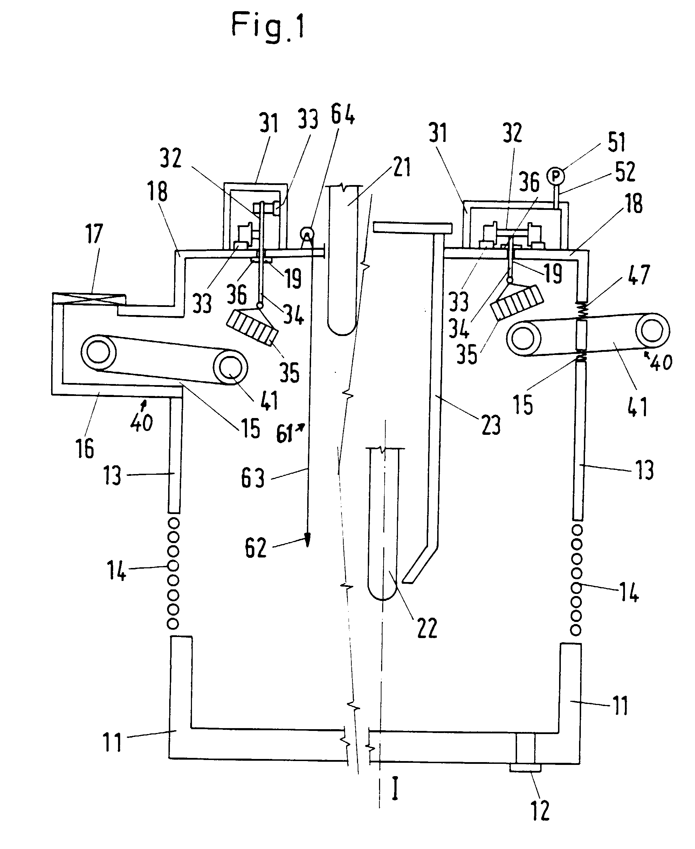

Hierbei zeigt die Figur 1 ein Untergefäß 11 eines Elektrolichtbogenofens, an dem ein Abstich 12 angeordnet ist. Mit dem Ofengefäß 11 fest verbunden ist ein Obergefäß 13, das einen Kühlbereich 14 aufweist. Das Obergefäß 13 ist durch eine Ofendecke 18 gasdicht verschlossen.

Durch die Ofendecke sind in der linken Seite der Figur I die Elektrode 21, die an einer nicht aufgezeigten Tragevorrichtung befestigt ist, und in der rechten Seite der Figur 1 eine auf der Ofenhauptachse I gelegene Elektrode 22 angeordnet, die in einem Elektrodenhalter 23 bis in den Bereich des Ofenuntergefäßes 11 ragt.

An der Ofendecke nach außen oder nach innen ragend, ist eine Ringkammer 31 angeordnet, in der eine auf Schienen 33 verfahrbare Fahreinrichtung 32 sich befindet. Die Schienen 33 können dabei horizontal parallel oder auch in einem rechten Winkel zueinander angeordnet sein.

An der Fahreinrichtung 32 ist eine Aufhängung 34 vorgesenen, an denen Lastmagnete 35 angehängt sind. Die Lastmagnete 35 werden dabei durch in der Ofendecke 18 vorgesehene Schlitze geführt. Die Schlitze 19 sind durch Abdeckungen 36 weitgehenst staubdicht verschließbar.

In dem zylindrischen Mantel des Obergefäßes 13 sind Durchtritte 15 vorgesehen, durch die beispielsweise in Form eines Förderbandes 41 der Möller in das Ofeninnere transportierbar ist. In der linken Seite der Figur 1 ist das Förderband 41 von einer Ausbuchtung 16, welche einen Deckel 17 aufweist, umgeben. In der rechten Seite der Figur 1 ist das Förderband 41 bei seinem Durchtritt 15 von einer Dichtung 47 umfaßt, die weitgehenst das Auftreten von Rauchgas verhindert. Diese Abdichtung kann durch eine Einrichtung zur Erzeugung eines Gasschleiers - hier nicht weiter dargestellt - verbessert werden.

An die Ringkammer 31 ist eine Druckstation mit einer Pumpe 51 und einer Zufuhrleitung 52 angeschlossen, mit deren Hilfe durch Erzeugung eines leichten Überdrucks die Ringkammer staubfrei und kühl gehalten werden kann.

Im Ofenobergefäß 13 ist eine Niveau-Meßeinrichtung 61 vorgesehen, die in Form von Sonden 62, die an einem Seil 63, welches über eine Winde 64 geführt wird, befestigt sind.

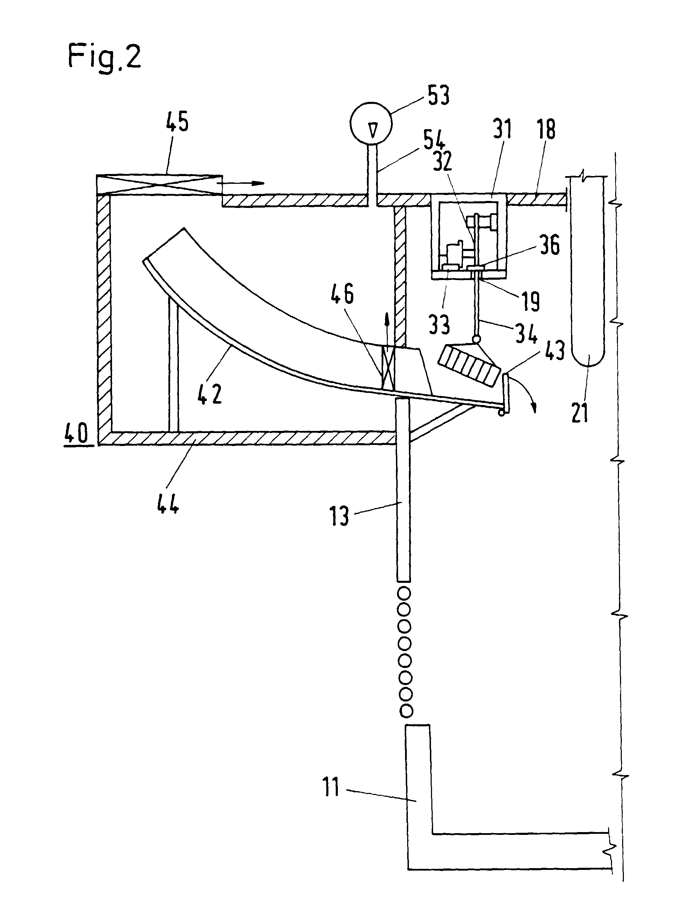

In der Figur 2 ist als Materialzuführung 40 eine Rutsche 42 dargestellt, die in einer Schleuse 44 angeordnet ist. Die Rutsche 42 weist kopfendig eine Klappe 43 auf. Die Schleuse 44 besitzt eine äußere Schleusenöffnung 45 und eine innere Schleusenöffnung 46.

Die Schleuse 44 ist darüber hinaus über eine Zuleitung 54 mit einer Pumpe 53 zur Erzeugung eines leichten Überdruckes verbunden.

## Patentansprüche

1. Beschickungsvorrichtung für einen geschlossenen, mindestens eine Elektrode (21) aufweisenden Lichtbogenofen, insbesondere zum Einschmelzen von Schrott, wobei die Charge konzentrisch zur und gleichmäßig rings um die Elektrode (21) zugeführt wird und an der Ofendecke (18) eine Ringkammer (31) angeordnet ist,
dadurch gekennzeichnet,
daß in der Ringkammer (31) eine konzentrisch um die Ofenhauptachse (I) führbare schienengebundene Fahreinrichtung (32) vorgesehen ist, an welcher schaltbare Lastmagnete (35) aufgehängt sind,
daß mindestens eine Materialzuführung (40) seitlich in das Ofenobergefäß (13) hineinragt und daß die Lastmagnete (35) mit einem die magnetische Aufnahme des Chargiermaterials sicherstellenden Abstand zur Materialzuführung (40) an dieser vorbeigeführt werden können.

2. Beschickungsvorrichtung nach Anspruch 1,
dadurch gekennzeichnet,
daß in der Ofendecke (18) ein kreisförmige geführter Schlitz (19) vorgesehen ist, durch den eine stangenförmige Aufhängung (34) der Lastmagnete (35) führbar ist.

3. Beschickungsvorrichtung nach 2.,
dadurch gekennzeichnet,
daß zwischen den Aufhängungen (34) Abdeckungen (36) vorgesehen sind, die ein Eindringen von Staub vom Innenraum des Obergefäßes (13) in die Ringkammer (31) behindern.

4. Beschickungsvorrichtung nach 3.,
daß die Abdeckungen (36) als kreisförmige Gleisplatten ausgeführt sind.

5. Beschickungsvorrichtung nach 3. oder 4.,
dadurch gekennzeichnet,
daß die Ringkammer (31) über eine Zufuhrleitung (52) mit einer Pumpe (51) verbunden ist, mit der in der Ringkammer (31) ein Leichter gasüberdruck eingestellbar ist.

6. Beschickungsvorrichtung nach 1.,
dadurch gekennzeichnet,
daß die Materialzuführung (40) ein endloses Förderband (41) ist, z. B. ein Flachplattenband.

7. Beschckungsvorrichtung nach 6.,
dadurch gekennzeichnet,
daß am Durchtritt (15) das Förderband (41) durch die Ofenseitenwand des Obergefäßes (13) durch eine als Dichtung (47) ausgebildete Umwandung geführt wird.

8. Beschickungsvorrichtung nach 7.,
dadurch gekennzeichnet,
daß die Dichtung (47) aus elastischem warmfestem Material besteht.

9. Beschickungsvorrichtung nach 1.,
dadurch gekennzeichnet,
daß die Materialzuführung (40) als Rutsche (42) ausgebildet ist.

10. Beschickungsvorrichtung nach den Ansprüchen 6 oder 19,
dadurch gekennzeichnet,
daß der Möller über eine gasdicht verschließbare Schleuse (44) zuführbar ist.

## Claims

1. A charging device for a closed arc furnace having at least one electrode (21), in particular for smelting scrap, wherein the charge is supplied concentrically to and uniformly around the electrode (21), and an annular chamber (31) is arranged on the furnace roof (18), characterised in that a rail-borne travelling means (32) which can be guided concentrically about the major axis (I) of the furnace is provided in the annular chamber (31), from which means switchable lifting magnets (35) are suspended,
that at least one material feed means (40) projects laterally into the upper furnace vessel (13) and that the lifting magnets (35) can be moved past the material feed means (40) at a distance therefrom which ensures magnetic picking-up of the charging material.

2. A charging device according to Claim 1,
characterised in that a slot (19) formed in a circle is provided in the furnace roof (18), through which slot a rod-like suspension means (34) for the lifting magnets (35) can be guided.

3. A charging device according to Claim 2,
characterised in that cover means (36) are provided between the suspension means (34), which prevent dust from penetrating from the interior of the upper vessel (13) into the annular chamber (31).

4. A charging device according to Claim 3,
characterised in that the cover means (36) are in the form of circular sliding plates.

5. A charging device according to Claim 3 or 4,
characterised in that the annular chamber (31) is connected via a supply line (52) to a pump (51), by means of which a slight excess gas pressure can be set in the annular chamber (31).

6. A charging device according to Claim 1,
characterised in that the material supply means (40) is an endless conveyor belt (41), e.g. a flat-plate belt.

7. A charging device according to Claim 6,
characterised in that at the passage hole (15) the conveyor belt (41) is guided through the furnace side wall of the upper vessel (13) by a surrounding wall designed as a seal (47).

8. A charging device according to Claim 7,
characterised in that the seal (47) is made of elastic, heat-resistant material.

9. A charging device according to Claim 1,
characterised in that the material supply means (40) is designed as a chute (42).

10. A charging device according to Claims 6 or 9,
characterised in that the burden can be supplied via a lock chamber (44) which can be closed to be gas-tight.

## Revendications

1. Dispositif de chargement pour un four à arc électrique fermé, présentant au moins une électrode (21), en particulier pour fondre des ferrailles, la charge étant amenée de façon concentrique et régulièrement autour de l'électrode (21) et une chambre annulaire (31) étant agencée sur la couverture du four (18),
caractérisé en ce que, dans la chambre annulaire (31), il est prévu un dispositif de déplacement (32), lié à des rails, pouvant être guidé concentriquement autour de l'axe principal (I) du four, sur lequel sont suspendus des aimants de charge commutables (35), en ce qu'au moins une amenée de matière (40) pénètre latéralement dans le récipient supérieur de four (13) et en ce que les aimants de charge (35) peuvent être amenés à celle-ci avec un écartement, garantissant la réception magnétique de la matière de chargement, par rapport à l'amenée de matière (40).

2. Dispositif de chargement selon la revendication 1,
caractérisé en ce que, dans la couverture du four (18), il est prévu une fente guidée circulaire (19), à travers laquelle une suspension (34) en forme de barre des aimants de charge (35) peut être guidée.

3. Dispositif de chargement selon la revendication 2,
caractérisé en ce que, entre les suspensions (34), sont prévus des recouvrements (36) qui empêchent une pénétration de poussière de l'espace interne du récipient de four (13) dans la chambre annulaire (31).

4. Dispositif de chargement selon la revendication 3,
caractérisé en ce que les recouvrements (36) sont réalisés comme des plaques circulaires.

5. Dispositif de chargement selon la revendication 3 ou 4,
caractérisé en ce que la chambre annulaire (31) est reliée, par l'intermédiaire d'un conduit d'amenée (52), à une pompe (51) grâce à laquelle une légère surpression de gaz dans la chambre annulaire (31) peut être réglée.

6. Dispositif de chargement selon la revendication 1,
caractérisé en ce que l'amenée de matière (40) est une bande de transport sans fin (41), par exemple une bande à plaque plate.

7. Dispositif de chargement selon la revendication 6,
caractérisé en ce que, au niveau du passage (15), la bande de transport (41) est guidée à travers la paroi latérale du récipient de four (13) à travers une paroi réalisée comme joint étanche (47).

8. Dispositif de chargement selon la revendication 7,
caractérisé en ce que le joint étanche (47) est constitué d'une matière élastique résistant à la chaleur.

9. Dispositif de chargement selon la revendication 1,
caractérisé en ce que l'amenée de matière (40) est réalisée comme glissière (42).

10. Dispositif de chargement selon la revendication 6 ou 9,
caractérisé en ce que le minerai et les fondants peuvent être amenés par l'intermédiaire d'un sas (44) pouvant être fermé de façon étanche au gaz.
